# EUROPÄISCHE PATENTSCHRIFT

(11) **EP 1 443 869 B1**
(45) Veröffentlichungstag und Bekanntmachung des Hinweises auf die Patenterteilung: **19.10.2005**
(21) Anmeldenummer: 02803021.1
(22) Anmeldetag: 14.11.2002
(51) Int. Cl.: A61C 13/00, G05B 19/416

(54) **VERFAHREN ZUR HERSTELLUNG VON ZAHNERSATZ**
METHOD FOR PRODUCING DENTURES
PROCEDE DE PRODUCTION DE PROTHESE DENTAIRE

(30) Priorität: 15.11.2001 DE 10156156
(43) Veröffentlichungstag der Anmeldung: 11.08.2004
(73) Patentinhaber: 3M ESPE AG, 82229 Seefeld (DE)
(72) Erfinder: SUTTOR, Daniel, D-82229 Seefeld (DE); SPRENGART, Thomas, D-86899 Landsberg (DE); SCHAAF, Michael, D-82211 Herrsching (DE); HERTLEIN, Guenter, D-82110 Germering (DE)
(86) Internationale Anmeldenummer: PCT/EP2002/012738
(87) Internationale Veröffentlichungsnummer: WO 2003/041606

(56) Entgegenhaltungen:
- EP-A- 1 066 801
- DE-A- 4 204 327

## Beschreibung

Die vorliegende Erfindung betrifft ein Verfahren zur Herstellung von Zahnersatz durch Fräsbearbeitung eines Werkstücks. In diesem Verfahren wird in einem Verfahrensabschnitt, in dem eine Änderung der Belastung des Werkstücks oder des Fräswerkzeugs oder von sowohl Werkstück als auch Fräswerkzeug aufgrund von Berechnungen, die vor Beginn dieser Fräsbearbeitung angestellt wurden, zu erwarten ist, die Relativgeschwindigkeit zwischen Fräswerkzeug und Werkstück geändert.

Die moderne Zahntechnik verwendet zur Bearbeitung von Rohlingen computergesteuerte Abbildungs- und Fräsvorrichtungen, so genannte CAD/CAM-Systeme. In diesen Systemen wird zunächst entweder die Zahnsituation im Mund des Patienten, ein Abdruck davon oder ein mit Hilfe des Abdrucks erstelltes Modell abgetastet, so dass die dreidimensionale Form der Zahnsituation als numerischer Datensatz vorliegt. Diese Abtastung erfolgt dabei mechanisch oder optisch. Aus den so ermittelten Daten kann die Form des herzustellenden Zahnersatzes numerisch ermittelt werden. Im Fall, dass in der Zahnsituation beispielsweise Zähne fehlen, müssen beispielsweise Daten für fehlende Zähne ergänzt werden.

Auf Grundlage dieser Daten kann die Form mittels einer Fräsmaschine aus einem Werkstück herausgefräst werden. Die endgültige Fertigstellung des Zahnersatzes einschließlich gegebenenfalls notwendiger Feinbearbeitung oder Verblendung kann schließlich in Handarbeit erfolgen. Bei der Fräsbearbeitung wird der Rohling herkömmlich zunächst in einem ersten Frässchritt, dem so genannten Schruppen, grob bearbeitet und in einem zweiten Frässchritt, dem so genannten Schlichten, feiner nachbearbeitet. Die Fräsbahn und die Vorschubgeschwindigkeit werden in den Verfahren gemäß dem Stand der Technik anhand des numerisch vorliegenden Datensatzes geregelt, wie es beispielsweise in EP 1 066 801 A1 offenbart ist. Als Vorschubgeschwindigkeit ist im Rahmen der vorliegenden Anmeldung die Relativgeschwindigkeit von Werkstück und Werkzeug zueinander zu verstehen.

Die Regelung der Fräsbahn bzw. der Vorschubgeschwindigkeit, die im Stand der Technik beschrieben ist, setzt einen hohen apparativen Aufwand voraus. Insbesondere muss während der gesamten Fräsbearbeitung permanent die momentane Belastung des Fräswerkzeugs ermittelt und auf der Basis der ermittelten Werte die Vorschubgeschwindigkeit angepasst werden. Damit ermöglicht die vorliegende Erfindung ein Verfahren, das im Vergleich zu den auf Regelung basierten Verfahren einen deutlich geringeren apparativen und/oder elektronischen Aufwand erfordert.

Eine Aufgabe der vorliegenden Erfindung war es daher, ein Verfahren bereitzustellen, das diesen hohen apparativen Aufwand nicht benötigt. Überrascheriderweise wurde nun gefunden, dass auch bei einem komplexen Fräsverfahren wie der diffizilen Herstellung von Zahnersatz, an den unter anderem die Anforderung nach hoher Passgenauigkeit gestellt wird, keine Regelung der Vorschubgeschwindigkeit erforderlich ist.

Demgemäß betrifft die vorliegende Erfindung ein Verfahren zur Herstellung von Zahnersatz durch Fräsbearbeitung eines Werkstücks, das dadurch gekennzeichnet ist, dass bei einer vor Beginn der Fräsbearbeitung ermittelten, während der Fräsbearbeitung auftretenden Belastungsänderung des Werkstücks oder des Fräswerkzeugs oder von sowohl Werkstück als auch Fräswerkzeug die Relativgeschwindigkeit zwischen Fräswerkzeug und Werkstück unter Verzicht auf Regelungstechnik geändert wird.

Im erfindungsgemäßen Verfahren können diese Änderungen der Relativgeschwindigkeit ein oder mehrere Male in Abhängigkeit von der Anzahl der im voraus berechneten Belastungsänderungen erfolgen.

Prinzipiell ist die Fräsbearbeitung des Werkstücks im erfindungsgemäßen Verfahren mittels sämtlicher geeigneter Frässtrategien denkbar. Insbesondere sind das Zeilenfräsen, das Radialfräsen und das Zirkularfräsen bevorzugt, wobei auch zwei oder mehr dieser Frässtrategien miteinander kombiniert werden können.

In den Verfahrensabschnitten, in denen Belastungsänderungen zu erwarten sind, kann die Vorschubgeschwindigkeit prinzipiell in alle denkbaren Richtungen variiert werden. In Abhängigkeit von beispielsweise der Art der Belastungsänderung, also der Tatsache, ob sich die Belastung erhöht oder erniedrigt, dem Material des Werkstücks, der Geometrie des herzustellenden Zahnersatzes und/oder der Geometrie des Werkstücks im betreffenden Verfahrensabschnitt kann die Vorschubgeschwindigkeit erhöht oder erniedrigt werden. Die Variation der Vorschubgeschwindigkeit kann dabei sowohl kontinuierlich als auch diskontinuierlich variiert werden.

Die Belastung des Werkstücks und/oder des Fräswerkzeugs ist unter anderem dann gegeben, wenn die Drehrichtung des Fräswerkzeugs und die Bewegungsrichtung des Werkstücks relativ zum Fräswerkzeug an der Eingriffsstelle entgegengesetzt sind.

Die Belastung des Werkstücks und/oder des Fräswerkzeugs beim Fräsen und insbesondere beim Zeilenfräsen steigt mit zunehmendem Winkel zwischen der zu erzeugenden Fläche und der Fräswerkzeugachse. Dies gilt insbesondere dann, wenn das Fräswerkzeug senkrecht in das Material des Werkstücks eintaucht. In einer bevorzugten Ausführungsform des erfindungsgemäßen Verfahrens wird ab einem bestimmten Winkel zwischen der Vorschubrichtung und der Waagerechten auf eine Reduzierung der Vorschubgeschwindigkeit zurückgegriffen, um eine Überlastung von Werkzeug und/oder Material zu vermeiden. Dieser Winkel liegt im allgemeinen Bereich von größer oder gleich 1°, bevorzugt größer oder gleich 45° und besonders bevorzugt größer oder gleich 60° bis kleiner oder gleich 90°.

Eine hohe Belastung des Werkstücks und/oder des Fräswerkzeugs beim Fräsen tritt außerdem dann auf, wenn das Fräswerkzeug in einem großen Umfangsbereich, insbesondere in einem Umfangsbereich von größer oder gleich 90°, insbesondere bei nahezu 180°, von Werkstückmaterial umgeben ist, wie es beispielsweise bei Einschneidungen in der zu erzeugenden dreidimensionalen Form beim Zirkularfräsen auftritt. Wie bereits oben beschrieben, sieht das erfindungsgemäße Verfahren vor, derartige Belastungsspitzen anhand des numerisch vorliegenden Datensatzes vor Beginn der Fräsbearbeitung zu lokalisieren. Das erfindungsgemäße Verfahren sieht in einer bevorzugten Ausführungsform vor, dass die Vorschubgeschwindigkeit an diesen Stellen reduziert wird. Ändert sich in der Folge diese Belastung wieder hin zu niedrigeren Werten, so kann erfindungsgemäß die Vorschubgeschwindigkeit wieder erhöht werden.

Eine weitere Entlastung des Fräswerkzeugs bei der Bearbeitung von Werkstücken wird in einer ebenfalls bevorzugten Ausführungsform des erfindungsgemäßen Verfahrens dadurch erreicht, dass das Fräswerkzeug beim beispielsweise Zirkularfräsen nicht senkrecht zur Schnitt-Tiefe der jeweiligen Ebene eintaucht, sondern längs einer Rampe, die einen Winkel von im allgemeinen kleiner 90° und bevorzugt von kleiner oder gleich 89° mit der Werkstückoberfläche einschließt. Insbesondere bei der Bearbeitung von Werkstücken aus beispielsweise Titan oder anderen Metallen, wie sie untenstehend aufgeführt sind, sind diesbezüglich weiter bevorzugt Winkel von kleiner oder gleich 45°, bevorzugt von kleiner oder gleich 10°, weiter bevorzugt von kleiner oder gleich 5° und besonders bevorzugt Winkel im Bereich von 1 bis 2°. Statt einer einzigen Rampe kann das Fräswerkzeug auch beispielsweise eine Zickzackbahn beschreiben, bei der es vor- und rückwärts über mehrere kleine Rampen bis zum Erreichen der gewünschten Schnitt-Tiefe eintaucht. Sobald das Fräswerkzeug die gewünschte Schnitt-Tiefe erreicht hat, durchläuft es im Fall des Zirkularfräsens eine vollständige Zirkularbahn, wobei bevorzugt hierbei auch der durch den oder die Rampenwinkel zunächst nicht abgefrästen Bereiche abgefräst werden.

Eine weitere Entlastung des Fräswerkzeugs bei der Bearbeitung von Werkstücken wird in einer ebenfalls bevorzugten Ausführungsform des erfindungsgemäßen Verfahrens dadurch erreicht, dass sich die Drehrichtung des Fräswerkzeugs und die Bewegungsrichtung des Werkstücks relativ zum Fräswerkzeug beim Fräsen an der Eingriffsstelle in Gleichlauf befinden. Mit dieser bevorzugten Ausführungsform wird die Relativbewegung so gewählt, dass sie nicht gegen die Schneidkante des Fräswerkzeugs erfolgt.

Die Bewegung des Fräswerkzeugs kann im erfindungsgemäßen Verfahren in einer, zwei oder drei Raumachsen erfolgen. Bevorzugt ist die Bewegung in 3 Raumachsen, wobei diese Achsen vorzugsweise senkrecht aufeinander stehen und weiter bevorzugt lineare Achsen darstellen. In einer ebenfalls bevorzugten Ausführungsform des erfindungsgemäßen Verfahrens wird das Werkstück vom Fräswerkzeug sowohl an der Unterseite als auch an der Oberseite bearbeitet. In einer besonders bevorzugten Ausführungsform werden 2 Achsen durch die Bewegung des Fräswerkzeugs abgedeckt, die dritte Achse durch die Bewegung des Werkstückes.

Im Rahmen des erfindungsgemäßen Verfahrens ist es unter anderem möglich, Zahnersatz und Gerüste bis hin zu Gebissvollbögen herzustellen. Demgemäß sind auch Inlays, Onlays, Implantate oder Verblockungen herstellbar.

Als Werkstücke können im erfindungsgemäßen Verfahren sämtliche Werkstücke verwendet werden, aus denen Zahnersatz hergestellt werden kann. Als Materialien, aus denen die Werkstücke gefertigt sind, sind Metalle und Nichtmetalle geeignet.

Bevorzugte Metalle sind hierbei unter anderem Titan wie beispielsweise Titan Grade 1 bis 4, bevorzugt Grade 2, Titan-Legierungen wie beispielsweise Ti-6Al-4V, Edelmetalle oder Edelmetall-Legierungen. Die Angaben zum Titan Grade beziehen sich hierbei auf ISO 5832-2 beziehungsweise auf ASTM F67.

Die zu bearbeitenden Werkstücke aus metallischen Materialien weisen in einer besonders bevorzugten Verfahrensführung Quadergeometrie auf. Weiter bevorzugt sind Quadergeometrien mit einer Länge von bis zu 100 mm, bevorzugt von bis zu 60 mm, weiter bevorzugt zwischen 15 mm und 60 mm, mit einer Breite von bis zu 100 mm, bevorzugt von bis zu 50 mm, weiter bevorzugt von bis zu 25 mm und mit einer Höhe von bis zu 50 mm, bevorzugt von bis zu 25 mm und weiter bevorzugt von bis zu 20 mm, wobei unter anderem Höhen von 10 oder 14 mm besonders bevorzugt, sind.

Als nichtmetallische Materialien sind unter anderem faserverstärkte Kunststoffe oder Keramiken zu nennen. Hinsichtlich der Keramiken werden im erfindungsgemäßen Verfahren bevorzugt vorgesinterte Keramiken, so genannte Grünkeramiken eingesetzt. Wiederum bevorzugt sind hierbei Grünkeramiken aus Zirkonoxid oder Aluminiumoxid oder Keramiken, wie sie beispielsweise in der DE 199 04 522 A1, der DE 199 04 523 A1, der WO 00/46166 oder der WO 00/46168 beschrieben sind, wobei diese Schriften diesbezüglich in den Kontext der vorliegenden Anmeldung vollumfänglich einbezogen werden.

Die Rohbruchfestigkeiten der zu bearbeitenden Keramikwerkstücke liegen bevorzugt im Bereich von kleiner oder gleich 50 MPa, weiter bevorzugt im Bereich von 10 bis 50 MPa, weiter bevorzugt im Bereich von 31 bis 50 MPa und besonders bevorzugt im Bereich von 31 bis 40 MPa. Solche Keramikwerkstücke sind in der DE 101 07 451.4 beschrieben, die diesbezüglich in den Kontext der vorliegenden Anmeldung vollumfänglich einbezogen wird. Ebenfalls bevorzugt sind Rohbruchfestigkeiten der zu bearbeitenden Keramikwerkstücke im Bereich von kleiner oder gleich 50 MPa, weiter bevorzugt im Bereich von 10 bis 50 MPa, weiter bevorzugt im Bereich von 15 bis 30 MPa und besonders bevorzugt im Bereich von 23 bis 28 MPa. Solche Keramikwerkstücke sind in der PCT/EP00/07992 beschrieben, die diesbezüglich in den Kontext der vorliegenden Anmeldung vollumfänglich einbezogen wird.

Die Rohbruchfestigkeit wurde dabei in Anlehnung an EN ISO 6872, Teil 8.3.2. ermittelt, wobei eine zylindrische Probe mit einem Durchmesser von 25 mm und einer Dicke von 2 mm verwendet wird. Der Teilkreisdurchmesser der Probenauflage beträgt hierbei 14 mm und der Durchmesser des Stempels 3,6 mm.

Die zu bearbeitenden Werkstücke aus nichtmetallischen Materialien weisen in einer besonders bevorzugten Verfahrensführung Quadergeometrie oder Zylindergeometrie auf. Besonders bevorzugt hinsichtlich der oben erwähnten Keramiken ist die Zylindergeometrie mit einer Länge von bis zu 100 mm, bevorzugt zwischen 15 mm und 60 mm, und einem Durchmesser von bis zu 50 mm und bevorzugt von bis zu 25 mm. Hinsichtlich der Quadergeometrie werden bevorzugt Keramik-Werkstücke eingesetzt, die eine Länge von bis zu 150 mm, bevorzugt von bis zu 100 mm, eine Breite von bis zu 150 mm, bevorzugt von bis zu 100 mm und eine Höhe von bis zu 50 mm und bevorzugt von bis zu 25 mm aufweisen.

Zur Handhabung des Werkstücks vor, während und/oder nach der Fräsbearbeitung kann das Werkstück in einer speziellen Vorrichtung befestigt werden. Solche Vorrichtungen sind beispielsweise in der EP 0 982 009 A2 und der DE 298 15 486 U1 beschrieben, die diesbezüglich in den Kontext der vorliegenden Anmeldung vollumfänglich einbezogen werden. Neben diesen Vorrichtungen sind auch Vorrichtungen denkbar, die eine das Werkstück mindestens teilweise umgebende Ausnehmung aufweisen und mit ihrer Außenseite in die Bearbeitungsmaschine einspannbar sind, wobei das Werkstück nur mit einem Teil der Ausnehmung verbunden ist, und wie sie in der DE 100 37 531.6 oder der PCT/EP01/07050 beschrieben sind, die diesbezüglich in den Kontext der vorliegenden Anmeldung vollumfänglich einbezogen werden.

Eine weitere Aufgabe, die der vorliegenden Erfindung zugrunde liegt, ist die Vermeidung eines hohen Schmiermittelverbrauchs. Solche Schmiermittel werden im allgemeinen zur Spülung und/oder Kühlung des Werkstücks und/oder des Fräswerkzeugs und/oder zur Reibungsverminderung zwischen Werkstück und Fräswerkzeug bei der Fräsbearbeitung benötigt.

Im Vergleich zu den Verfahren gemäß dem Stand der Technik werden folglich nur die jeweils minimal erforderlichen Schmiermittelmengen eingesetzt. Insbesondere wird im vorliegenden Verfahren die Methode der Schwallspülung nicht eingesetzt, was vor allem im Hinblick auf Fräsbearbeitungen, bei denen beispielsweise nur bedingt umweltverträgliche Substanzen als Schmiermittel eingesetzt werden müssen, aus ökologischen Gründen vorteilhaft ist. Ebenso sind ökonomische Vorteile durch den geringeren Schmiermittelverbrauch zu erwähnen.

Demgemäß betrifft die vorliegende Erfindung auch ein Verfahren, wie oben beschrieben, das dadurch gekennzeichnet ist, dass es ohne Schwallspülung durchgeführt wird.

Im erfindungsgemäßen Verfahren können ein oder mehrere Schmiermittel verwendet werden. Werden zwei oder mehr davon eingesetzt, so können diese gleichzeitig oder nacheinander zur Anwendung kommen. Werden zwei oder mehr davon gleichzeitig eingesetzt, so können fertige Mischungen aus zwei oder mehr verwendet werden oder die einzelnen Schmiermittel getrennt voneinander zur Anwendung kommen.

Als Schmiermittel sind unter anderem bevorzugt natürliche oder synthetische Öle oder ölbasierte Zusammensetzungen wie beispielsweise Öl-Wasser-Emulsionen. Besonders bevorzugt sind synthetische Öle.

Als besonders vorteilhaft hat es sich herausgestellt, Schmiermittel in einer Menge von nicht mehr als 50 ml pro Prozessstunde einzusetzen. Der Begriff Prozessstunde bezeichnet hierbei diejenige Zeit, während der eine Fräsbearbeitung eines Werkstücks erfolgt.

Demgemäß betrifft die vorliegende Erfindung ein Verfahren, wie oben beschrieben, das dadurch gekennzeichnet ist, dass eine Schmierstoffmenge von kleiner oder gleich 50 ml pro Prozessstunde eingesetzt wird.

Die Schmiermittel können von außen, von innen oder sowohl von außen als auch von innen zugeführt werden. Unter dem Begriff "von innen" werden im Rahmen der vorliegenden Anmeldung Verfahrensführungen verstanden, bei denen die Zufuhr eines Schmiermittels über das Fräswerkzeug erfolgt. Unter dem Begriff "von außen" werden im Rahmen der vorliegenden Anmeldung sämtliche anderen Verfahrensführungen verstanden. Besonders bevorzugt ist vorliegend die Zufuhr von außen.

Weiter kann die Zufuhr der Schmiermittel sowohl permanent als auch gepulst erfolgen. Im Rahmen einer permanenten Zufuhr kann hierbei die Menge des Schmiermittels konstant gehalten werden oder über der Zeit variiert werden. Erfolgt die Zufuhr gepulst, so können die Pulse unterschiedliche Länge aufweisen und die Menge des pro Puls zugeführten Schmiermittels von Puls zu Puls sich ändern oder konstant gehalten werden.

Weiter bevorzugt sind Verfahrensführungen, bei denen Schmierstoffmengen im Bereich von 1 bis 50 ml pro Prozessstunde und besonders bevorzugt im Bereich von 1 bis 10 ml pro Prozessstunde eingesetzt werden.

Weiter bevorzugt sind Verfahrensführungen, bei denen während der Fräsbearbeitung des Werkstücks Schmierstoffe im Bereich von kleiner oder gleich 1 ml pro Prozessstunde, besonders bevorzugt von kleiner 1 ml pro Prozessstunde eingesetzt werden. In einer weiter besonders bevorzugten Ausführungsform wird kein Schmierstoff eingesetzt. Diese Alternative wird im Rahmen der vorliegenden Anmeldung als "trockene Bearbeitung" bezeichnet.

Demgemäß betrifft die vorliegende Erfindung auch ein Verfahren, wie oben beschrieben, das dadurch gekennzeichnet ist, dass die Fräsbearbeitung des Werkstücks trocken erfolgt.

Die trockene Bearbeitung kann grundsätzlich bei allen oben beschriebenen Werkstückmaterialien zur Anwendung kommen. Besonders bevorzugt ist diese Bearbeitung bei nicht-metallischen Werkstücken wie beispielsweise den Grünkeramiken.

Die Trockenbearbeitung kann in einer bevorzugten Ausführungsform unter Gaszufuhr erfolgen, wobei als Gase unter anderem Stickstoff, ein oder mehrere Edelgase, Luft oder Gemische aus zwei oder mehr davon verwendet werden. Weiterhin sind diese Gase auch als Kühlmittel einsetzbar. Die Gaszufuhr kann hierbei kontinuierlich oder/und diskontinuierlich wie beispielsweise in regelmäßigen oder/und unregelmäßigen Pulsen erfolgen.

Die zugeführten Gase können, sollte dies im Rahmen des erfindungsgemäßen Verfahrens erforderlich sein, abgesaugt werden. Diese Absaugung kann prinzipiell kontinuierlich oder diskontinuierlich erfolgen, wobei die kontinuierliche Absaugung bevorzugt ist.

Im Rahmen der vorliegenden Erfindung werden diejenigen Verfahrensabschnitte im Laufe der Fräsbearbeitung des Werkstücks, in denen Belastungsänderungen zu erwarten sind, in einer ganz besonders bevorzugten Ausführungsform nicht durch Regelungstechnik im Lauf des Verfahrens ermittelt, wie dies in den Verfahren gemäß dem Stand der Technik erfolgt und beispielsweise in der EP 1 066 801 A1 offenbart ist und bei denen diejenigen Daten, die während der Fräsbearbeitung gewonnen werden, zur Änderung der Vorschubgeschwindigkeit verwendet werden.

Besonders bevorzugt wird daher im Rahmen des erfindungsgemäßen Verfahrens die Vorschubgeschwindigkeit durch Steuerung den Belastungsänderungen angepasst. Die Belastungsänderungen und die Fräsbahn werden daher vor dem Beginn der Fräsbearbeitung anhand des numerisch vorliegenden Datensatzes ermittelt und auf dieser Basis die jeweilige Vorschubgeschwindigkeit vor dem Beginn der Fräsbearbeitung festgelegt.

In einer bevorzugten Ausführungsform wird dieser Datensatz durch ein Verfahren, umfassend die folgenden Schritte, bestimmt:
(a) Abtastung eines dreidimensionalen Modells einer Zahnsituation;
(b) Erzeugung eines Datensatzes aus diesen Abtastergebnissen;
(c) Berechnung der Fräsbahn auf der Basis dieses Datensatzes;
(d) Berechnung der Belastungsänderungen im Rahmen der Berechnung dieser Fräsbahn, wobei als zu berücksichtigende Parameter, neben der Fräsbahn, unter anderem die Art des Fräswerkzeugs und/oder die Geometrie und/oder das Material des Werkstücks eingehen.

Demgemäß betrifft die vorliegende Erfindung auch ein Verfahren, wie oben beschrieben, das dadurch gekennzeichnet ist, dass die Relativbewegung zwischen Fräswerkzeug und Werkstück gesteuert wird.

In einer weiter bevorzugten Ausführungsform werden die bei der Fräsbearbeitung entstehenden Späne indirekt oder direkt abgesaugt.

In einer weiter bevorzugten Ausführungsform erfolgt die Absaugung direkt. Besonders bevorzugt erfolgt die direkte Absaugung über einen zirkular angeordneten Absaugspalt um die Spindel beziehungsweise das Fräswerkzeug. Die Spindel bezeichnet hierbei die Antriebs- und Halteinheit des Werkzeugs.

Demgemäß betrifft die vorliegende Erfindung auch ein Verfahren, wie oben beschrieben, das dadurch gekennzeichnet ist, dass entweder durch die Fräsbearbeitung zerspantes Material oder eingesetzter Schmierstoff oder sowohl durch die Fräsbearbeitung zerspantes Material als auch eingesetzter Schmierstoff durch direkte Absaugung vom Werkstück entfernt werden.

Der Begriff "direkte Absaugung" bezeichnet in der vorliegenden Anmeldung Verfahrensführungen, bei denen die Absaugung im wesentlichen unmittelbar an der Zerspanstelle erfolgt. Unter dem Begriff "indirekte Absaugung" werden im Rahmen der vorliegenden Anmeldung all jene Ausführungsformen verstanden, die nicht von der "direkten Absaugung" umfasst sind.

Besonders bevorzugt ist eine Verfahrensführung, bei der dieses Absaugen durch permanentes oder zwischenzeitliches Einblasen mindestens eines Gases oder eines Gasgemisches wie beispielsweise Luft unterstützt wird. Das mindestens eine Gas kann hierbei an einer oder an mehreren Stellen eingeblasen werden. In einer ganz besonders bevorzugten Ausführungsform erfolgt dieses Einblasen drosselgesteuert, wobei in Fällen, in denen das Einblasen nicht permanent erfolgt, Pulsfrequenzen im Bereich von 1 bis 60 pro sec bevorzugt, Frequenzen im Bereich von 1 bis 10 pro sec besonders bevorzugt und Frequenzen im Bereich von 1 bis 5 pro sec weiter besonders bevorzugt sind.

Überraschend wurde gefunden, dass durch dieses pulsartige Einblasen die Effizienz der Absaugung erhöht werden kann, indem im Vergleich zum permanenten Einblasen mehr zerspantes Material pro Zeiteinheit entfernt werden kann.

Demgemäß betrifft die vorliegende Erfindung auch ein Verfahren, wie oben beschrieben, das dadurch gekennzeichnet ist, dass in mindestens einem Verfahrensschritt durch pulsartiges Einblasen mindestens eines Gases oder eines Gasgemisches die Effizienz der Absaugung von zerspantem Material erhöht wird.

Bei der Bearbeitung von beispielsweise metallischen Werkstücken wie Titanwerkstücken erfolgt bevorzugt ein weitgehend permanentes Einblasen.

Die Drücke, mit denen eingeblasen wird, liegen bevorzugt im Bereich von 0,5 bis 5 bar, weiter bevorzugt im Bereich von 0,75 bis 4 bar und besonders bevorzugt im Bereich von 1 bis 3 bar. Die Drücke können im Verlauf der Bearbeitung konstant gehalten werden oder kontinuierlich oder diskontinuierlich geändert werden.

Weiter bevorzugt wird das Einblasen so durchgeführt, dass zerspantes Material von den Maschinenführungen ferngehalten wird.

Ein weiterer Vorteil des Einblasens ist in einer weiter reduzierten Fräswerkzeugbelastung zu sehen, indem Verlustreibung aufgrund der Wechselwirkung zwischen Fräswerkzeug und zerspantem Material vermieden wird.

Wie bereits oben erwähnt, können im erfindungsgemäßen Verfahren unterschiedliche Fräsverfahren wie beispielsweise Zeilenfräsen, Radialfräsen oder Zirkularfräsen eingesetzt werden.

Beim Zeilenfräsen wird grundsätzlich jede zweite Zeile im Gegenlauf gefräst. Hierbei kann das Problem auftreten, dass das Fräswerkzeug beim Herausarbeiten von Tiefenstrukturen senkrecht zur Zeilenebene oft nahezu senkrecht ins Werkstückmaterial eintaucht und damit stirnseitig für einige Zeit ununterbrochen in vollem Eingriff mit dem Werkstückmaterial ist. In einem solchen "Bohrvorgang" werden Fräswerkzeug und Werkstück im allgemeinen starker mechanischer Belastung ausgesetzt.

Dieser Nachteil wird durch das Zirkularfräsen vermieden. In diesem Fräsverfahren wird die zu erzeugende dreidimensionale Form des Zahnersatzes schichtweise in zirkularen Bahnen umlaufen, so dass bis auf einen Eintauchvorgang zu Beginn jeder Bahn immer nur die Mantelfläche des Fräswerkzeugs in Eingriff mit dem Werkzeugmaterial ist. In einer bevorzugten Ausführungsform wird daher das erfindungsgemäße Verfahren so durchgeführt, dass in mindestens einem Verfahrensabschnitt das Werkstück einer Zirkularfräsbearbeitung zugeführt wird.

Demgemäß betrifft die vorliegende Erfindung auch ein Verfahren, wie oben beschrieben, das dadurch gekennzeichnet ist, dass die Fräsbearbeitung des Werkstücks in mindestens einem Verfahrensschritt mittels Zirkularfräsen erfolgt.

Daher kann das Werkstück ausschließlich durch Zirkularfräsen oder aber durch Kombination von Zirkularfräsen mit mindestens einem anderen Fräsverfahren, bevorzugt entweder Zeilenfräsen oder Radialfräsen oder Zeilen- und Radialfräsen, bearbeitet werden.

Demgemäß sind auch Verfahrensführungen denkbar, bei denen ein Werkstück unter anderem durch Zirkularfräsen bearbeitet wird, wobei mindestens ein Schmierstoff über Schwallspülung zugeführt wird.

Unter anderem bevorzugt sind daher im Rahmen des erfindungsgemäßen Verfahrens Ausführungsformen, bei denen das Werkstück in einem Schritt grob bearbeitet wird und in einem zweiten Schritt einer Feinbearbeitung unterworfen wird, wobei die Grobbearbeitung in einem Schrupp-Schritt und die Feinbearbeitung in einem Schlicht-Schritt erfolgt.

Dabei wird vorteilhafterweise der Schrupp-Schritt durch Zirkulärfräsen durchgeführt. Durch Zirkulärfräsen werden im allgemeinen Treppenstrukturen am Werkstück erzeugt, die in dem folgenden Schlicht-Schritt abgetragen werden können.

Weiter bevorzugt sind Verfahren, bei denen der Schrupp- und der Schlicht-Schritt in unterschiedlichen Richtungen der Relativbewegungen von Werkstück und Fräswerkzeug erfolgen.

Demgemäß betrifft die vorliegende Erfindung auch ein Verfahren, wie oben beschrieben, das dadurch gekennzeichnet ist, dass die Fräsbearbeitung einen Schrupp-Schritt und einen Schlicht-Schritt umfasst, wobei Schrupp-Schritt und Schlicht-Schritt in unterschiedlichen Richtungen der Relativbewegungen von Werkstück und Werkzeug erfolgen.

Besonders bevorzugt sind beim Schlicht-Schritt im Vergleich zum Schrupp-Schritt die Richtungen der Vorschübe im wesentlichen verschieden.

Weiter besonders bevorzugt wird der Schlicht-Schritt mit einem einzigen Fräswerkzeug oder mehreren gleichen oder voneinander verschiedenen Fräswerkzeugen durchgeführt.

Gemäß dieses Verfahrens können sämtliche oben beschriebenen Werkstücke bearbeitet werden. Besonders bevorzugt wird das Verfahren bei der Bearbeitung von Werkstücken aus nichtmetallischen Materialien wie beispielsweise den oben erwähnten Keramiken und insbesondere den Grünkeramiken eingesetzt.

Demgemäß betrifft die vorliegenden Erfindung auch ein Verfahren, wie oben beschrieben, das dadurch gekennzeichnet ist, dass ein nicht-metallisches Werkstück fräsbearbeitet wird.

Eine weitere Aufgabe, die der vorliegenden Erfindung zugrunde liegt, ist, es neben der Veränderung der Vorschubgeschwindigkeit in Abhängigkeit von zu erwartenden Belastungsänderungen zu vermeiden, dass nach dem oben beschriebenen Schrupp-Schritt mehr Werkstückmaterial am Werkstück verbleibt als für einen folgenden Schlicht-Schritt günstig ist. Das erfindungsgemäße Verfahren sieht diesbezüglich daher zwischen Schrupp- und Schlicht-Schritt einen Zwischenschritt vor.

Demgemäß betrifft die vorliegende Erfindung auch ein Verfahren, wie oben beschrieben, das dadurch gekennzeichnet ist, dass es folgende Schritte umfasst:
(i) Schruppen
(ii) Zwischenschritt
(iii) Schlichten

Durch den erfindungsgemäß vorgesehenen Zwischenschritt, der sich an den Schrupp-Schritt anschließt, bei dem im allgemeinen die Struktur des herzustellenden Zahnersatzes grob angenähert wird, wird vor allem vermieden, dass im Schlicht-Schritt die Belastung des Fräswerkzeugs und/oder des Werkstücks zu groß wird.

Unter anderem umfasst die vorliegende Erfindung damit auch die beschriebenen Dreischrittverfahren mit der bereits oben beschriebenen Schwallspülung.

In einer bevorzugten Ausführungsform erfolgt der Schritt (i) durch Zirkularfräsen, wobei dieser mit einem Fräswerkzeug oder mehreren gleichen oder voneinander verschiedenen Fräswerkzeugen durchgeführt werden kann.

Demgemäß betrifft die vorliegende Erfindung auch ein Verfahren, wie oben beschrieben, das dadurch gekennzeichnet, dass Schritt (i) mittels Zirkularfräsen durchgeführt wird.

Der Zwischenschritt (ii) kann hierbei prinzipiell gemäß sämtlicher geeigneter Fräsverfahren durchgeführt werden, wobei die bereits beschriebenen Verfahren bevorzugt sind.

Demgemäß betrifft die vorliegende Erfindung auch ein Verfahren, wie oben beschrieben, das dadurch gekennzeichnet, dass Schritt (ii) durch Zirkularfräsen oder Zeilenfräsen oder Radialfräsen oder einer Kombination aus zwei oder mehr dieser Fräsarten durchgeführt wird.

Unter anderem bevorzugt wird dieser Schritt (ii) als Zeilenfräsverfahren, bei der Herstellung von Kronen auch als Radialfräsverfahren ausgestaltet.

Gemäß dieses 3-Schritt-Verfahrens können sämtliche oben beschriebenen Werkstücke bearbeitet werden. Besonders bevorzugt wird das Verfahren bei der Bearbeitung von Werkstücken aus metallischen Materialien wie beispielsweise Titan eingesetzt.

Demgemäß betrifft die vorliegende Erfindung auch ein Verfahren, wie oben beschrieben, das dadurch gekennzeichnet, dass ein metallisches Werkstück fräsbearbeitet wird.

Selbstverständlich können neben den Schritten (i) bis (iii) mindestens ein weiterer Schrupp-Schritt und/oder mindestens ein weiterer Zwischen-Schritt und/oder mindestens ein weiterer Schlicht-Schritt vorgesehen werden.

Eine weitere Aufgabe, die der vorliegenden Erfindung zugrunde liegt, ist es, sicherzustellen, dass der zu fertigende Zahnersatz in das zu bearbeitende Werkstück passt. Deshalb wird zu Beginn der Berechnung geprüft, ob die Abmaße des zu fertigenden Zahnersatzes in das Werkstück und ob gegebenenfalls, falls dies erforderlich ist, das Werkstück unter Berücksichtigung des erforderlichen Bearbeitungsraumes in die bereits oben beschriebene Vorrichtung passt, in der das Werkstück zur besseren Handhabung befestigt wird. Die Abmaße der zu bearbeitenden Werkstücke und gegebenenfalls der Vorrichtungen, in denen diese befestigt werden können, sind hinterlegt und werden für die Überprüfung herangezogen.

Demgemäß betrifft die vorliegende Erfindung auch ein Verfahren zur Herstellung von Zahnersatz durch Fräsbearbeitung eines Werkstücks, insbesondere wie oben beschrieben, das dadurch gekennzeichnet ist, dass vor der Fräsbearbeitung des Werkstücks überprüft wird, ob der durch die Fräsbearbeitung herzustellende Zahnersatz in die äußeren Abmaße eines vorgewählten Werkstücks passt.

Im Rahmen des erfindungsgemäßen Verfahrens ist es auch möglich, vor der Fräsbearbeitung das zu bearbeitende Werkstück auf der Basis des vorliegenden Datensatzes aus zwei oder mehr Werkstücken, die sich beispielsweise in der Geometrie oder der Zusammensetzung unterscheiden, geeignet auszuwählen. Dabei ist es auch möglich, in Kombination mit der oben beschriebenen Ausführungsform sowohl das zu bearbeitende Werkstück zu überprüfen als auch aus zwei oder mehreren Werkstücken auszuwählen.

Demgemäß betrifft die vorliegende Erfindung auch ein Verfahren zur Herstellung von Zahnersatz durch Fräsbearbeitung eines Werkstücks, insbesondere wie oben beschrieben, das dadurch gekennzeichnet ist, dass vor der Fräsbearbeitung aus einem Pool, umfassend mindestens 2 Werkstücke mit unterschiedlichen äußeren Abmaßen, das im Hinblick auf den herzustellenden Zahnersatz optimale Werkstück ausgewählt wird, wobei die Auswahl beispielsweise bevorzugt über den Parameter "zu erwartendes Verlustmaterial" erfolgt.

Der der Fräsbahn zugrunde liegende Datensatz kann gemäß des erfindungsgemäßen Verfahrens derart im Raum gedreht werden, dass gegebenenfalls ein kleineres Ausgangswerkstück gewählt werden kann und damit weniger Verlustmaterial anfällt. Diese Drehung erfolgt dabei zweckmäßigerweise nur um eine zur Drehachse des Fräswerkzeugs parallele Achse. Prinzipiell ist die Drehung aber um alle Raumachsen möglich.

Um während der Fräsbearbeitung Schädigungen an beispielsweise dünnen Randbereichen der zu erzeugenden dreidimensionalen Form zu vermeiden, wird im erfindungsgemäßen Verfahren die Fräsbahn bevorzugt so ausgelegt, dass nach der Fräsbearbeitung an den kritischen Bereichen der oben erwähnten Werkstückmaterialien wie beispielsweise den oben erwähnten Keramiken eine Randverstärkung im Bereich von kleiner oder gleich 1 mm, bevorzugt von kleiner oder gleich 500 µm, weiter bevorzugt von kleiner oder gleich 300 µm, weiter bevorzugt von kleiner oder gleich 200 µm, weiter bevorzugt von 20 bis 200 µm und besonders bevorzugt im Bereich von 20 bis 50 µm verbleibt. Bei den oben erwähnten Metallen und/oder Metall-Legierungen liegen diese Randverstärkungen bevorzugt im Bereich von kleiner oder gleich 200 µm, weiter bevorzugt von 20 bis 200 µm und besonders bevorzugt im Bereich von 20 bis 50 µm.

Unter dem Begriff "Randverstärkung" wird im Rahmen der vorliegenden Anmeldung eine Verstärkung einer Präparationskante verstanden.

In einer ebenfalls bevorzugten Ausführungsform des erfindungsgemäßen Verfahrens wird die Geometrie des zu bearbeitenden Werkstücks bei der Berechnung der Bewegungsbahn des Fräswerkzeugs mit berücksichtigt. Dies vermeidet beispielsweise im Falle, dass das zu bearbeitende Werkstück, wie beispielsweise bevorzugt im Falle von Grünkeramiken, eine Zylindergeometrie aufweist, einen Leerlauf des Fräswerkzeugs in den Kantenbereichen eines den Zylinder umgebenden gedachten Quaders, indem bei der Berechnung der Bewegungsbahn nicht von der geometrisch einfacheren Form des Quaders, sondern von der tatsächlichen Zylinderform ausgegangen wird.

Als Fräswerkzeug können im Rahmen der vorliegenden Anmeldung grundsätzlich alle geeigneten Werkzeuge eingesetzt werden. Sollte es erforderlich sein, können zur Bearbeitung des Werkstücks auch zwei oder mehr Fräswerkzeuge verwendet werden, mit denen das Werkstück gleichzeitig oder nacheinander fräsbearbeitet wird. Unter anderem bevorzugt sind beispielsweise Fräswerkzeuge aus Hartmetall wie beispielsweise aus dem ISO-Bereich K05 bis K50. Die Fräswerkzeuge können eine oder mehrere Schneiden aufweisen. Der Durchmesser des Fräswerkzeugs liegt im allgemeinen im Bereich von 0,5 bis 5,0 mm, bevorzugt im Bereich von 1,0 bis 3,0 mm.

Weiter bevorzugt werden im erfindungsgemäßen Verfahren hinsichtlich der Fräswerkzeuge Auskraglängen realisiert, die mindestens siebenmal so groß sind wie der Durchmesser des jeweiligen Fräswerkzeugs.

Ebenfalls bevorzugt, insbesondere für das Ausfräsen von tiefen Taschen, sind Verfahrensführungen, bei denen der Zylinderschaft des Fräserwerkzeugs in einem Bereich oberhalb des Fräserschneidenbereichs so freigeschliffen wird, dass dieser nicht größer ist als der Durchmesser im Fräswerkzeugschneidbereich. Dadurch lässt sich vermeiden, dass das Fräswerkzeug beim Herausarbeiten tiefer Taschen oberhalb seines Schneidbereichs an das Werkstück anstößt.

Die Umdrehungszahlen des Fräswerkzeugs liegen im Rahmen des erfindungsgemäßen Verfahrens bevorzugt im Bereich von kleiner oder gleich 50.000 pro min, weiter bevorzugt im Bereich von 1.000 bis 50.000 pro min., weiter bevorzugt im Bereich von 2.000 bis 50.000 pro min. und besonders bevorzugt im Bereich von 5.000 bis 35.000 pro min.

Mittels des erfindungsgemäßen Verfahrens werden Standwege des Fräswerkzeugs erreicht, die bevorzugt im Bereich von 10 bis 500 m und weiter bevorzugt im Bereich von 50 - 300 m liegen.

Ist der erreichbare Standweg kleiner als für die Herstellung des Zahnersatzes notwendig, so sieht eine bevorzugte Ausführungsform des erfindungsgemäßen Verfahrens vor, dass während der Bearbeitung des Werkstücks das Fräswerkzeug gewechselt wird, was weiter bevorzugt automatisch erfolgt. Letztere Ausführungsform wird bevorzugt dergestalt erreicht, dass die verwendete Bearbeitungsmaschine über mehrere gleichartige Fräswerkzeuge verfügt. Auch Verfahrensführungen, bei denen ein Fräswerkzeug gegen ein davon verschiedenes Fräswerkzeug ausgetauscht wird, sind von der vorliegenden Erfindung mit umfasst.

In einer weiter bevorzugten Ausführungsform ist im erfindungsgemäßen Verfahren eine Umspannvorrichtung vorgesehen, mittels der im Lauf des Verfahrens, beispielsweise automatisiert, verschiedene Verhältnisse von Auskraglänge zu Durchmesser zu realisieren sind.

Ebenso ist es möglich, im Lauf des Verfahrens, beispielsweise automatisiert, ein erstes Fräswerkzeug gegen ein anderes Fräswerkzeug, das gleich dem oder verschieden von dem ersten Fräswerkzeug sein kann, und das in einem Werkzeugpool, umfassend mindestens dieses Werkzeug, vorrätig ist, auszutauschen. Ein derartiger Austausch kann auch mehrfach während der Fräsbearbeitung eines Werkstücks erfolgen.

Die Verfahrensdauer zur Herstellung des Zahnersatzes ist unter anderem von der Art des herzustellenden Zahnersatzes und der Art des zu bearbeitenden Materials abhängig. Bevorzugt liegen die Bearbeitungsdauern im Bereich von 15 min bis 8 h, weiter bevorzugt im Bereich von 15 min bis 4 h, weiter bevorzugt im Bereich von 15 min bis 2 h und besonders bevorzugt im Bereich von 15 min bis 1 h.

Im Rahmen des erfindungsgemäßen Verfahrens werden durch die oben beschriebenen vorteilhaften Ausgestaltungen Verhältnisse von Gewicht des zerspanten Materials zu Gewicht des bearbeiteten Werkstücks erreicht, die im allgemeinen im Bereich von 5 bis 35, bevorzugt im Bereich von 6 bis 30, besonders bevorzugt im Bereich von 7 bis 25, weiter besonders bevorzugt im Bereich von 8 bis 20 und ganz besonders bevorzugt im Bereich von 9 bis 15 liegen.

Die Erfindung wird anhand der Figuren zusätzlich erläutert. Es zeigen:
- FIG. 1: eine Seitenansicht eines Fräswerkzeugs;
- FIG. 2: eine schematische Darstellungen zum Gleichlauf- und Gegenlauffräsen;
- FIG. 3: eine typische Fräsbahn beim Zeilenfräsen;
- FIG. 4A: eine typische Fräsbahn beim Zirkularfräsen;
- FIG. 4B: eine Schnittansicht des Werkstücks nach dem Zirkularfräsen; und

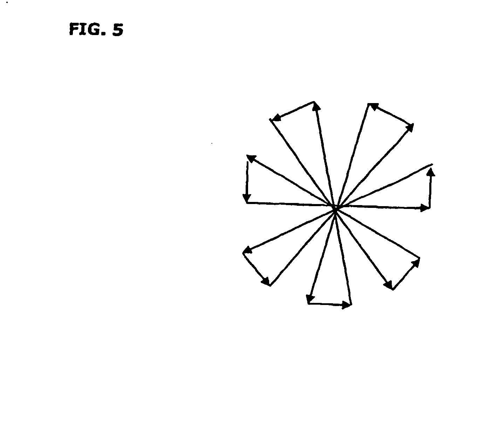

- FIG. 5: eine typische Fräsbahn beim Radialfräsen.

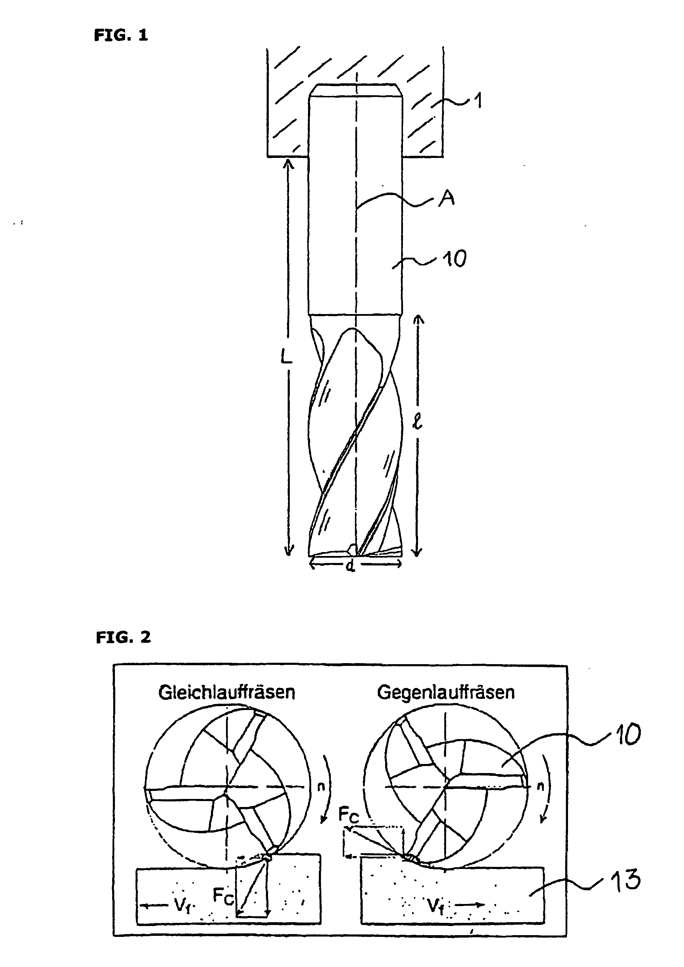

FIG. 1 zeigt ein Fräswerkzeug 10, das in einem Werkzeughalter 11 steckt und eine Fräswerkzeugachse A aufweist. Die Auskraglänge ist mit L angegeben, der Durchmesser mit d und die Länge des Schneidbereichs mit ℓ.

FIG. 2 zeigt zwei Darstellungen der Stirnseite des Fräswerkzeugs 10 in Eingriff mit einem Rohling 13. Die linke Skizze zeigt die Richtung der Vorschubgeschwindigkeit v_{f} des Rohlings in Gleichlauf mit der Drehrichtung n des Fräswerkzeugs, während die rechte Skizze Fräsen im Gegenlauf darstellt. Zusätzlich ist in beiden Skizzen der Kraftvektor F_{c} mit zugehörigem Kräfteparallelogramm eingezeichnet.

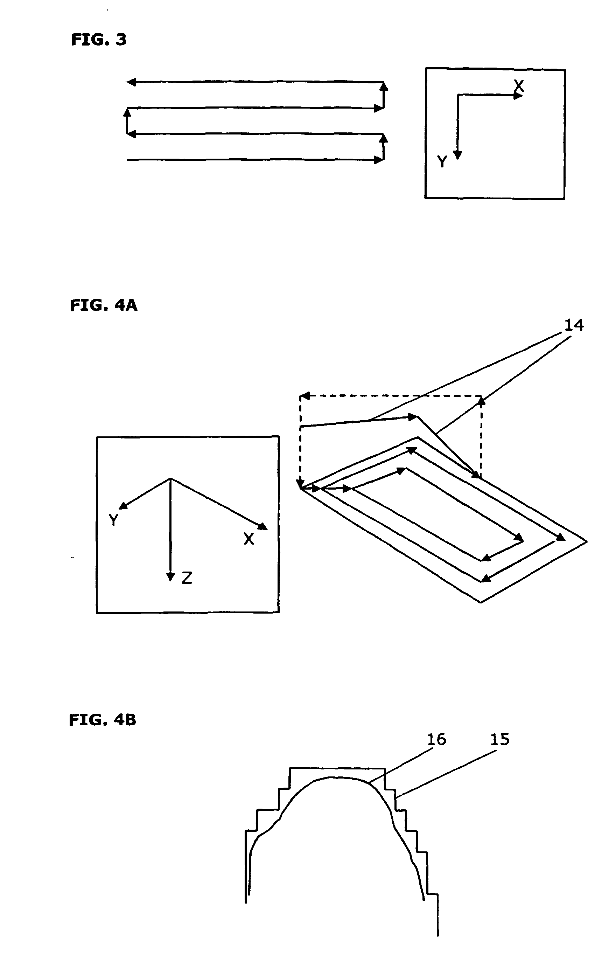

FIG. 3 zeigt schematisch den xy-Ebenenverlauf der Fräsbahn beim Zeilenschruppen, das zwangsläufig zwischen Gleich- und Gegenlauffräsen abwechselt. Der Abstand zwischen zwei Zeilen ist nicht größer als der Fräswerkzeugdurchmesser d. Der unterschiedliche Tiefenvorschub in z-Richtung ist in der Skizze nicht dargestellt.

FIG. 4A zeigt den Bahnverlauf beim Zirkularfräsen. Zunächst wird das Fräswerkzeug längs einer Rampe 14 zugestellt und bleibt anschließend über einen zirkularen Umlauf zusätzlich des Stücks des stehen gebliebenen Rampenteils auf der erreichten Schichtebenentiefe. Darauf steuert das Fräswerkzeug die nächste Bahn an und umläuft die zu erzeugende dreidimensionale Form auf einer höchstens einen Fräswerkzeugdurchmesser d weiter innen liegenden zweiten zirkularen Bahn.

FIG. 4B zeigt eine Schnittansicht einer durch Zirkularfräsen entstandenen Treppenform 15, die die zu erzeugende dreidimensionale Form 16 annähert. Es wird deutlich, dass die dreidimensionale Form nicht so genau angenähert werden kann wie beim Zeilenfräsen.

## Patentansprüche

1. Verfahren zur Herstellung von Zahnersatz durch Fräsbearbeitung eines Werkstücks, **dadurch gekennzeichnet, dass** bei einer vor Beginn der Fräsbearbeitung ermittelten, während der Fräsbearbeitung auftretenden Belastungsänderung des Werkstücks oder des Fräswerkzeugs oder von sowohl Werkstück als auch Fräswerkzeug die Relativgeschwindigkeit zwischen Fräswerkzeug und Werkstück unter Verzicht auf Regelungstechnik geändert wird.

2. Verfahren nach Anspruch 1, **dadurch gekennzeichnet, dass** es ohne Schwallspülung durchgeführt wird.

3. Verfahren nach Anspruch 1 oder 2, **dadurch gekennzeichnet, dass** die Relativbewegung zwischen Fräswerkzeug und Werkstück gesteuert wird.

4. Verfahren nach einem der Ansprüche 1 bis 3, **dadurch gekennzeichnet, dass** eine Schmierstoffmenge von kleiner oder gleich 50 ml pro Prozessstunde eingesetzt wird.

5. Verfahren nach einem der Ansprüche 1 bis 4, **dadurch gekennzeichnet, dass** die Fräsbearbeitung des Werkstücks trocken erfolgt.

6. Verfahren nach einem der Ansprüche 1 bis 5, **dadurch gekennzeichnet, dass** entweder durch die Fräsbearbeitung zerspantes Material oder eingesetzter Schmierstoff oder sowohl durch die Fräsbearbeitung zerspantes Material als auch eingesetzter Schmierstoff durch direkte Absaugung vom Werkstück entfernt werden.

7. Verfahren nach einem der Ansprüche 1 bis 6, **dadurch gekennzeichnet, dass** in mindestens einem Verfahrensschritt durch pulsartiges Einblasen mindestens eines Gases oder eines Gasgemisches die Effizienz der Absaugung von zerspantem Material erhöht wird.

8. Verfahren nach einem der Ansprüche 1 bis 7, **dadurch gekennzeichnet, dass** die Fräsbearbeitung des Werkstücks in mindestens einem Verfahrensschritt mittels Zirkularfräsen erfolgt.

9. Verfahren nach einem der Ansprüche 1 bis 8, **dadurch gekennzeichnet, dass** die Fräsbearbeitung einen Schrupp-Schritt und einen Schlicht-Schritt umfasst, wobei Schrupp-Schritt und Schlicht-Schritt in unterschiedlichen Richtungen der Relativbewegungen von Werkstück und Werkzeug erfolgen.

10. Verfahren nach Anspruch 9, **dadurch gekennzeichnet, dass** ein nicht-metallisches Werkstück fräsbearbeitet wird.

11. Verfahren nach Anspruch 10, **dadurch gekennzeichnet, dass** es folgende Schritte umfasst:
(i) Schruppen;
(ii) Zwischenschritt;
(iii) Schlichten.

12. Verfahren nach Anspruch 11, **dadurch gekennzeichnet, dass** Schritt (i) mittels Zirkularfräsen durchgeführt wird.

13. Verfahren nach Anspruch 11 oder 12, **dadurch gekennzeichnet, dass** Schritt (ii) durch Zirkularfräsen oder Zeilenfräsen oder Radialfräsen oder einer Kombination aus zwei oder mehr dieser Fräsarten durchgeführt wird.

14. Verfahren einem der Ansprüche 11 bis 13, **dadurch gekennzeichnet, dass** ein metallisches Werkstück fräsbearbeitet wird.

15. Verfahren zur Herstellung von Zahnersatz durch Fräsbearbeitung eines Werkstücks nach einem der Ansprüche 1 bis 14, **dadurch gekennzeichnet, dass** vor der Fräsbearbeitung des Werkstücks überprüft wird, ob der durch die Fräsbearbeitung herzustellende Zahnersatz in die äußeren Abmaße eines vorgewählten Rohlings passt.

16. Verfahren zur Herstellung von Zahnersatz durch Fräsbearbeitung eines Werkstücks nach einem der Ansprüche 1 bis 15, **dadurch gekennzeichnet, dass** vor der Fräsbearbeitung aus einem Pool, umfassend mindestens 2 Rohlinge mit unterschiedlichen äußeren Abmaßen, der im Hinblick auf den herzustellenden Zahnersatz optimale Rohling ausgewählt wird.

## Claims

1. Method of producing dentures by milling a workpiece, **characterized in that**, during a change in loading of the workpiece or of the milling tool or of both the workpiece and the milling tool, which change in loading is determined before the start of the milling and occurs during the milling, the relative speed between milling tool and workpiece is changed while with automatic control technology.

2. Method according to Claim 1, **characterized in that** it is carried out without flood lubrication.

3. Method according to Claim 1 or 2, **characterized in that** the relative movement between milling tool and workpiece is controlled.

4. Method according to one of Claims 1 to 3, **characterized in that** a lubricant quantity of less than or equal to 50 ml per process hour is used.

5. Method according to one of Claims 1 to 4, **characterized in that** the workpiece is milled in a dry manner.

6. Method according to one of Claims 1 to 5, **characterized in that** either material cut by the milling or the lubricant used or both material cut by the milling and the lubricant used are removed from the workpiece by direct extraction.

7. Method according to one of Claims 1 to 6, **characterized in that** the efficiency of the extraction of cut material is increased in at least one method step by pulse-like injection of at least one gas or a gas mixture.

8. Method according to one of Claims 1 to 7, **characterized in that** the milling of the workpiece is effected by means of circular milling in at least one method step.

9. Method according to one of Claims 1 to 8, **characterized in that** the milling comprises a roughing step and a finishing step, the roughing step and the finishing step being effected in different directions of the relative movements of workpiece and tool.

10. Method according to Claim 9, **characterized in that** a nonmetallic workpiece is milled.

11. Method according to Claim 10, **characterized in that** it comprises the following steps:
(i) roughing;
(ii) intermediate step;
(iii) finishing.

12. Method according to Claim 11, **characterized in that** step (i) is carried out by means of circular milling.

13. Method according to Claim 11 or 12, **characterized in that** step (ii) is carried out by circular milling or line-by-line milling or radial milling or by a combination of two or more of these types of milling.

14. Method according to one of Claims 11 to 13, **characterized in that** a metallic workpiece is milled.

15. Method of producing dentures by milling a workpiece, according to one of Claims 1 to 14, **characterized in that**, before the milling of the workpiece, it is checked whether the dentures to be produced by the milling fit into the outer dimensions of a preselected blank.

16. Method of producing dentures by milling a workpiece, according to one of Claims 1 to 15, **characterized in that**, before the milling, the optimum blank with regard to the dentures to be produced is selected from a pool comprising at least 2 blanks having different outer dimensions.

## Revendications

1. Procédé de production de prothèse dentaire par fraisage d'une pièce à usiner, **caractérisé en ce que**, pendant une variation de charge de la pièce à usiner ou de l'outil de fraisage ou non seulement de la pièce à usiner mais aussi de l'outil de fraisage, déterminée avant le début du fraisage, on modifie la vitesse relative entre l'outil de fraisage et la pièce à usiner en renonçant à la technologie de régulation.

2. Procédé selon la revendication 1, **caractérisé en ce qu'**il est réalisé sans rinçage au jet.

3. Procédé selon la revendication 1 ou 2, **caractérisé en ce que** le mouvement relatif entre l'outil de fraisage et la pièce à usiner est réglé automatiquement.

4. Procédé selon l'une quelconque des revendications 1 à 3, **caractérisé en ce que** l'on utilise une quantité de lubrifiant inférieure ou égale à 50 ml par heure de fonctionnement.

5. Procédé selon l'une quelconque des revendications 1 à 4, **caractérisé en ce que** l'on effectue le fraisage de la pièce à usiner à sec.

6. Procédé selon l'une quelconque des revendications 1 à 5, **caractérisé en ce que** le matériau coupé par le fraisage ou le lubrifiant utilisé ou non seulement le matériau coupé par le fraisage mais aussi le lubrifiant utilisé sont éliminés de la pièce à usiner par extraction directe.

7. Procédé selon l'une quelconque des revendications 1 à 6, **caractérisé en ce que** l'efficacité de l'extraction de matériau coupé est augmentée en au moins une étape de procédé par injection en impulsion d'au moins un gaz ou un mélange de gaz.

8. Procédé selon l'une quelconque des revendications 1 à 7, **caractérisé en ce que** l'on effectue le fraisage de la pièce à usiner en au moins une étape de procédé au moyen d'un fraisage circulaire.

9. Procédé selon l'une quelconque des revendications 1 à 8, **caractérisé en ce que** le fraisage comprend une étape de dégrossissage et une étape d'usinage lisse, où on effectue l'étape de dégrossissage et l'étape d'usinage lisse dans des directions différentes des mouvements relatifs de la pièce à usiner et de l'outil.

10. Procédé selon la revendication 9, **caractérisé en ce que** l'on fraise une pièce à usiner non métallique.

11. Procédé selon la revendication 10, **caractérisé en ce qu'**il comprend les étapes suivantes :
(i) dégrossissage ;
(ii) étape intermédiaire ;
(iii) usinage lisse.

12. Procédé selon la revendication 11, **caractérisé en ce que** l'étape (i) est réalisée au moyen d'un fraisage circulaire.

13. Procédé selon la revendication 11 ou 12, **caractérisé en ce que** l'étape (ii) est réalisée au moyen d'un fraisage circulaire ou d'un fraisage à coupes parallèles ou d'un fraisage radial ou d'une combinaison de deux ou plus de ces types de fraisages.

14. Procédé selon l'une quelconque des revendications 11 à 13, **caractérisé en ce que** l'on fraise une pièce à usiner métallique.

15. Procédé de fabrication de prothèse dentaire par fraisage d'une pièce à usiner selon l'une quelconque des revendications 1 à 14, **caractérisé en ce qu'**avant le fraisage de la pièce à usiner, on vérifie si la prothèse dentaire à fabriquer par le fraisage est adaptée aux dimensions extérieures d'une ébauche choisie à l'avance.

16. Procédé de fabrication de prothèse dentaire par fraisage d'une pièce à usiner selon l'une quelconque des revendications 1 à 15, **caractérisé en ce qu'**avant le fraisage, on choisit l'ébauche optimale pour la prothèse à fabriquer dans un ensemble, comprenant au moins 2 ébauches avec des dimensions extérieures différentes.
